# EUROPÄISCHE PATENTSCHRIFT

(11) **EP 1 433 676 B1**
(45) Veröffentlichungstag und Bekanntmachung des Hinweises auf die Patenterteilung: **09.08.2006**
(21) Anmeldenummer: 03012392.1
(22) Anmeldetag: 30.05.2003
(51) Int. Cl.: B60S 1/08, G01N 21/45

(54) **Sensorvorrichtung zur Erfassung der Benetzung einer transparenten Scheibe**
Sensing device for detecting moisture on a transparent glass pane
Dispositif de détection d'humidité sur une vitre transparente

(30) Priorität: 23.12.2002 DE 10261923
(43) Veröffentlichungstag der Anmeldung: 30.06.2004
(73) Patentinhaber: ROBERT BOSCH GMBH, 70442 Stuttgart (DE)
(72) Erfinder: Schmitt, Patrick, 77839 Lichtenau (DE); Hodapp, Bruno, 77855 Achern-Oensbach (DE); Pientka, Rainer, 77871 Renchen (DE); Meier, Hans, 77833 Ottersweier (DE); Blitzke, Henry, 77815 Buehl (DE); Wolf, Frank, 77815 Buehl (DE); Mounawar, Mounaime, 67000 Strasbourg (FR)

(56) Entgegenhaltungen:
- DE-A- 19 821 335
- DE-A- 19 955 423
- DE-C- 19 713 910

## Beschreibung

Die Erfindung bezieht sich auf eine Sensorvorrichtung zur Erfassung einer Benetzung auf einer transparenten Scheibe mit wenigstens einem Strahlungssender und wenigstens einem Strahlungsempfänger, die in einem Sensorgehäuse angeordnet sind, wobei refraktive Strahlungsführungsmittel vorgesehen sind, die vom Sender emittierte Strahlung in die Scheibe einkoppeln und einen von der Benetzung der Scheibe abhängigen Teil der eingekoppelten Strahlung unter Totalreflexion an wenigstens einer Oberfläche der Scheibe aus der Scheibe auskoppeln.

### Stand der Technik

In modernen Fahrzeugen der gehobenen Klasse werden heutzutage vielfach sogenannte Regensensoren eingesetzt. Derartige Vorrichtungen dienen der bedarfgerechten Ansteuerung der Scheibenwisch- beziehungsweise -wischwaschanlage. Die Benetzung der Scheibe durch Regen, Nebel, Spritzwasser etc. soll selbsttätig gemessen und die Scheibenwischer beziehungsweise die Spritzanlage soll automatisch betätigt werden. Ziel solcher Vorrichtungen ist es, den Fahrer eines Kraftfahrzeugs von der manuellen Durchführung derartiger Aufgaben zu entlasten und seine Konzentration nicht vom Straßenverkehr abzulenken.

Üblicherweise sind derartige Sensoren in einem Gehäuse untergebracht, das im Wischbereich der Wischerblätter innen an der Windschutzscheibe angebracht ist. Das Grundprinzip eines Regensensors beruht darauf, dass Licht, insbesondere Licht im infraroten Spektralbereich, von einem Sender emitiert und über refraktive Strahlungsführungsmittel, zum Beispiel Linsen, in die Windschutzscheibe eingekoppelt wird. Bei geeignet gewähltem Einkopplungswinkel kommt es an der äußeren Oberfläche der Windschutzscheibe, das heißt beim Übertritt der Strahlung vom optisch dichteren Medium (Glas der Windschutzscheibe) zum optisch dünneren Medium (Außenluft) zur Totalreflexion. Das totalreflektierte Licht wird von weiteren refraktiven Strahlungsführungsmitteln, zum Beispiel weiteren Linsen, aus der Scheibe ausgekoppelt und einem Strahlungsempfänger zugeführt. Der Grad der Totalreflexion, das heißt der Anteil des totalreflektierten Lichtes ist abhängig von dem Benetzungsgrad der Scheibe. Befindet sich nämlich zum Beispiel ein Wassertropfen in dem Bereich, in dem das vom Sender emitierte Licht auf die äußere Oberfläche der Scheibe fällt, verringert sich die Differenz der Brechungsindices der Medien beiderseits der Grenzfläche, was zu geänderten Totalreflexionsbedingungen führt. Eine dem Empfänger nachgeschaltete Auswerteeinheit registriert die Änderungen des totalreflektierten Strahlungsanteils und berechnet hieraus den aktuellen Benetzungsgrad beziehungsweise die geeigneten Ansteuerungsparameter für die Scheibenwischanlage.

Da der Sensor, wie erwähnt, im Bereich der Windschutzscheiben angebracht ist, ist es wünschenswert, ihn so klein wie möglich zu gestalten, um die Sicht des Fahrzeugsführers nicht unnötig einzuschränken. Anderseits erfordert eine präzise Messung ein möglichst starkes Signal um statistisches sowie Verstärkerrauschen möglichst zu reduzieren. Es wird daher allgemein versucht, einen Sender einerseits so klein wie möglich zu bauen, andererseits jedoch einen möglichst großen Anteil seines emittierten Lichtes für die Messung nutzbar zu machen und gleichzeitig die Gehäuseabmessungen möglichst klein zu halten.

Aus der DE 199 55 423 A1 ist eine gattungsbildende Vorrichtung bekannt, bei der die der Scheibe zugewandte Wandung des Gehäuses wenigstens teilweise transparent ausgestaltet ist und Linsen zur Ein- und Auskopplung des Lichtes in die und aus der Scheiben einstückig mit dieser Gehäusewandung ausgebildet sind. Eine Einkoppellinse ist in unmittelbarer Nähe eines Senders angeordnet, so dass ein großer Anteil des von diesem Sender abgestrahlten Lichtes von der Einkoppellinse aufgenommen werden kann. Andererseits ist in unmittelbarer Nähe einer Auskoppellinse ein Empfänger angeordnet, so dass ein großer Anteil des von der Auskoppellinse ausgekoppelten Lichtanteils von dem Empfänger erfasst werden kann.

Obgleich die bekannte Vorrichtung einen vergleichsweise großen Anteil der emitierten Strahlung für die Messung nutzen kann und gleichzeitig eine kleine Gehäusestruktur ermöglicht, muss als nachteilig angesehen werden, dass noch immer ein zu großer Anteil des vom Sender emitierten Lichtes für die Messung nicht genutzt werden kann, sondern im Gegenteil als Streulicht im Gehäuse die Detektion durch den Empfänger stört.

### Vorteile der Erfindung

Die erfindungsgemäße Vorrichtung gemäß Anspruch 1 baut auf dem Stand der Technik dadurch auf, dass weitere reflektive Strahlungsführungsmittel vorgesehen sind, die die vom Sender emittierten Strahlungsanteile, welche von den refraktiven Strahlungsmitteln nicht unmittelbar erfasst werden, diesen mittelbar zuführen. Dies ermöglicht es, auch diejenigen Lichtanteile effizient zu nutzen, die bei bekannten Vorrichtungen der Messung verloren gehen. Durch geeignete Abstimmung der Symmetrien der refraktiven und der reflektiven Strahlungsführungsmittel kann sogar eine nahezu vollständige Nutzung des vom Sender emittierten Lichtes erreicht werden.

Die Erfindung ist gemäß Anspruch 2 in besonders nützlicher Weise ausgestaltet, da die vorgenannten Vorteile dadurch in analoger Weise auf den empfängerseitigen Teil der Vorrichtung übertragen werden können. Es wird nämlich dadurch möglich, dass ein größerer Anteil des durch die Auskoppellinse aus der Scheibe ausgekoppelten Lichtes dem Empfänger zugänglich gemacht wird, was zusätzlich die Genauigkeit beziehungsweise die Geschwindigkeit der Messung steigert.

Die Vorzüge der Ausgestaltung gemäß Anspruch 3 bestehen vor allem darin, dass keine separaten Teile in die Vorrichtung eingebaut werden müssen. Dies verringert insbesondere den Platzbedarf und führt daher zu einer kleineren Ausgestaltung des Gehäuses.

Aus einer Ausgestaltung gemäß Anspruch 4 ergibt sich der Vorteil, dass die einzelnen Gehäuseteile, die beim Zusammenbau miteinander zu verbinden sind, besonders klein ausgestaltet werden können, und die reflektiven Strahlungsführungsmittel dennoch im relevanten Zusammenbauzustand eine optimale Leistung erbringen. Insbesondere sind auf diese Weise auch komplexere Strukturen, wie beispielsweise Hohlspiegelstrukturen mit einfachen Formen der Gehäuseeinzelteile, insbesondere ohne spritzgusstechnisch ungünstige Hinterschneidungen, realisierbar.

Der Vorteil der alternativen Ausgestaltung gemäß Anspruch 5 liegt insbesondere darin, dass bestehende Gehäuseformen unverändert oder nur leicht modifiziert weiterverwendet werden können.

Die Ausgestaltung gemäß Anspruch 6 führt zu einer besonders kostengünstigen Realisierung der erfindungsgemäßen Sensorvorrichtung, da die Gehäuseteile beispielsweise als Kunststoffspritzgussteile ausgebildet werden können, bei denen die gewünschten reflektiven Strahlungsführungsmittel in einem kurzen, nachgeschalteten Oberflächenvergütungsschritt geschaffen werden können.

Der Vorteil der Ausgestaltung gemäß Anspruch 7 liegt darin, dass die Ausbildung der refraktiven Strahlungsführungsmittel als Kunststofflinsen analog zu dem zuvor Gesagten eine besonders kostengünstige Gestaltung der Sensorvorrichtung ermöglicht.

Durch die alternative Ausgestaltung der refraktiven Strahlungsführungsmitteln gemäß Anspruch 8 wird eine weitere Reduzierung des Sensorvolumens erreicht. Zudem können bei dieser Ausführungsform die reflektiven Strahlungsführungsmittel einfachere Strukturen aufweisen, da der Akzeptanzwinkel der erfindungsgemäßen, treppenartigen Struktur größer ist als der herkömmlicher Linsen.

Die spezielle Wahl der Strahlungsart gemäß Anspruch 9 bietet zwei Vorteile. Zum einen ist nämlich die Erzeugung und Detektion infraroten Lichtes, insbesondere mit der vorzugsweise verwendeten SMD-Technologie, besonders einfach und kostengünstig. Zum anderen liegt dieser Spektralbereich außerhalb der Sichtbarkeit für den Fahrzeugführer, so dass Irritationen durch den Sensor ausgeschlossen sind.

### Zeichnungen

Die Erfindung wird nun unter Bezugnahme auf die beigefügten Zeichnungen anhand bevorzugter Ausführungsformen beispielhaft erläutert.

Es zeigen:
- Figur 1: eine schematische Draufsicht auf eine Ausführungsform der erfindungsgemäßen Sensorvorrichtung;
- Figur 2: einen schematischen Querschnitt durch die erfindungsgemäße Sensorvorrichtung von Figur 1 entlang der Schnittlinie II - II in Figur 1;
- Figur 3: einen schematischen Querschnitt durch eine zweite Ausführungsform der erfindungsgemäßen Sensorvorrichtung; und
- Figur 4: eine schematische Detaildarstellung einer besonderen Ausführungsform der refraktiven Strahlungsführungsmittel.

### Beschreibung der Ausführungsbeispiele

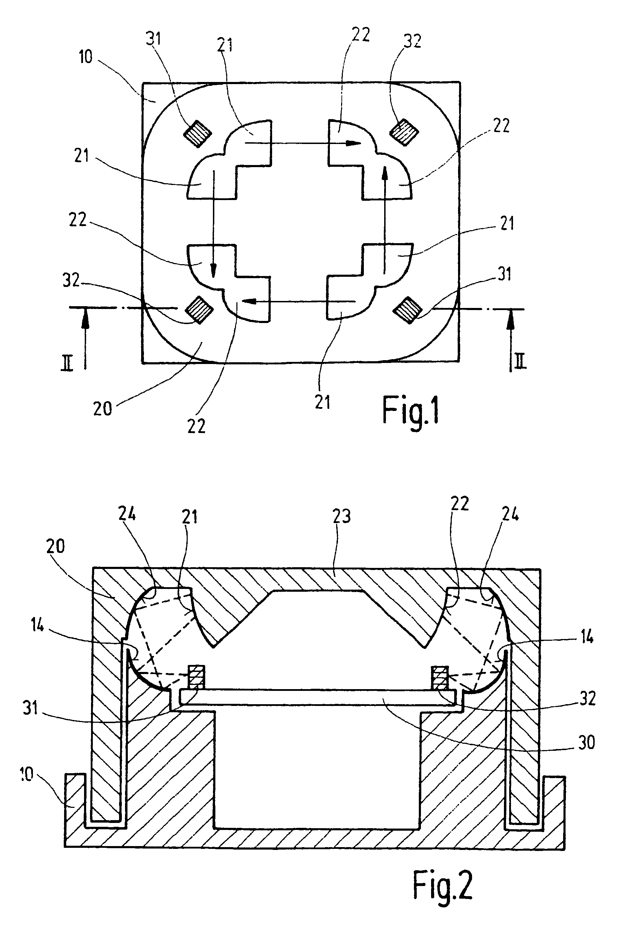

Figur 1 zeigt eine schematische Draufsicht auf eine erste Ausführungsform der erfindungsgemäßen Sensorvorrichtung. Sie soll im Folgenden gemeinsam mit Figur 2 beschrieben werden, die einen schematischen Querschnitt durch dieselbe Sensorvorrichtung entlang der Schnittlinie II - II darstellt. Die Sensorvorrichtung ist in einem zweiteiligen Gehäuse 10, 20 angeordnet. Figur 1 zeigt die Ansicht auf die Fläche 23, die im Montagefall mit der nicht dargestellten Scheibe in Kontakt steht. Diese Fläche ist Bestandteil des Gehäuseteiles 20. Zwischen den Gehäuseteilen 10, 20 ist eine elektronische Platine 30 angeordnet, auf der zwei Infrarotsender 31 sowie zwei Infrarotempfänger 32 angeordnet sind. Zwischen jeweils einem Sender 31 und einem Empfänger 32 ist ein Paar Linsen angeordnet, bestehend aus je einer Einkoppellinse 21 und einer Auskoppellinse 22. Diese Linsen sind Bestandteil der Gehäusewandung 23. Die Einkoppellinse 21 dient der Aufnahme des vom zugeordneten Infrarotsender emitierten Lichtes und der Einkopplung in die Scheibe unter einem geeigneten Winkel. Die Auskoppellinse 22 nimmt den von der Scheibe totalreflektierten Anteil des Lichtes auf und gibt ihn an den jeweils zugeordneten Empfänger weiter. Die Pfeile in Figur 1 verdeutlichen die wesentliche Richtung der Strahlungsführung.

In Figur 2 sind durch gestrichelte Linien Strahlungsbestandteile angedeutet, die von einem Sender 31 emitiert werden, jedoch bei herkömmlichen Sensorvorrichtungen nicht von der Einkoppellinse 21 aufgenommen und in die Scheibe eingekoppelt werden. Symmetrisch hierzu sind ebenfalls durch gestrichelte Linien Strahlungsbestandteile angedeutet, die von der Auskoppellinse 22 aus der Scheibe ausgekoppelt werden, bei herkömmlichen Sensorvorrichtungen jedoch nicht den Empfänger 32 erreichen. Diese Strahlungsbestandteile werden erfindungsgemäß von als Hohlspiegelelemente ausgeführten Gehäuseflächen 14, 24 aufgefangen und auf die Einkoppellinse 21 beziehungsweise von der Auskoppellinse 22 auf den Empfänger 32 geleitet. Sie können daher mit zur Messung beitragen, was den Signalpegel und damit die Genauigkeit beziehungsweise die maximale Geschwindigkeit der Messung wesentlich erhöht. In dem Ausführungsbeispiel der Figuren 1 und 2 setzen sich die Hohlspiegelelemente aus verspiegelten Wandungsbestandteilen beider Gehäuseteile 10, 20 zusammen. Sie entfalten somit ihre Wirkung erst im Zusammenbauzustand. Dieser modulare Aufbau ermöglicht eine besonders platzsparende Ausgestaltung der Sensorvorrichtung und eine kostengünstige Fertigung.

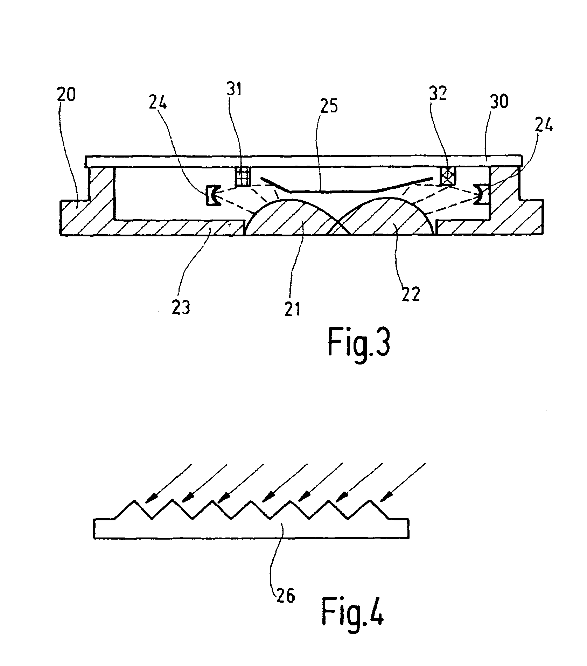

Figur 3 zeigt einen schematischen Querschnitt durch eine zweite Ausführungsform der erfindungsgemäßen Sensorvorrichtung. Gleiche Bezugszeichen stehen hier für funktional gleiche Elemente wie in den Figuren 1 und 2. Im Unterscheid zu der oben beschriebenen Ausführungsform sind die Elemente der reflektiven Strahlungsführungsmittel jedoch nicht als Bestandteil des Gehäuses ausgeführt. Vielmehr sind sie als separates Bauteil ausgebildet, das zwischen der Platine 30 und den Linsen 21, 22 beziehungsweise der Gehäusewandung 23 eingelegt wird. Dies kann beispielsweise in Form eines geeignet ausgestalteten Einlegeblechs oder einer verspiegelten Kunststofffolie erfolgen. Zusätzlich zu den Hohlspiegelelementen 24 ist bei der Ausführungsform von Figur 3 ein zentrales Planspiegelelement 25 vorgesehen, das nicht nur den oben bereits erläuterten Zweck der reflektiven Strahlungsführungsmittel erfüllt, sondern zusätzlich als Blende zwischen dem Sender 31 und dem Empfänger 32 dient, die unerwünschte Streustrahlung des Senders 31 vom Empfänger 32 fernhält und so eine weitere Verbesserung der Messqualität ermöglicht.

Figur 4 stellt eine besondere Ausführungsform der refraktiven Strahlungsführungsmittel, insbesondere einer Einkoppelvorrichtung 21, dar. Statt als klassische Linse ist die Einkoppelvorrichtung 21 als transparente, treppenartige Struktur ausgebildet, die dieselbe Funktion wie eine klassische Linse erfüllt, nämlich die Einkopplung des vom Sender 31 emitierten Lichtes in die Scheibe, jedoch flacher und großflächiger ausgebildet werden kann und somit insgesamt raumsparend und besonders effizient ist. Eine analoge Struktur kann selbstverständlich auch für die Auskopplung des totalreflektierten Lichtes aus der Scheibe verwendet werden.

Während die Erfindung insbesondere mit Bezug auf einige bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Stattdessen soll die Offenbarung der vorliegenden Erfindung den Umfang der Erfindung veranschaulichen, der in den nachfolgenden Ansprüchen dargelegt ist.

Die vorhergehende Beschreibung der Ausführungsbeispiele gemäß der vorliegenden Erfindung dient nur zu illustrativen Zwecken und nicht zum Zwecke der Beschränkung der Erfindung.

## Patentansprüche

1. Sensorvorrichtung zur Erfassung einer Benetzung auf einer transparenten Scheibe mit wenigstens einem Strahlungssender (31) und wenigstens einem Strahlungsempfänger (32), die in einem Sensorgehäuse (10, 20) angeordnet sind, wobei refraktive Strahlungsführungsmittel (21, 22, 26) vorgesehen sind, die vom Sender (31) emittierte Strahlung in die Scheibe einkoppeln und einen von der Benetzung der Scheibe abhängigen Teil der eingekoppelten Strahlung unter Totalreflexion an wenigstens einer Oberfläche der Scheibe aus der Scheibe auskoppeln und dem Empfänger (32) zuführen, **dadurch gekennzeichnet, dass** weitere reflektive Strahlungsführungsmittel (14, 24, 25) vorgesehen sind, die vom Sender (31) emittierte Strahlungsanteile, welche von den refraktiven Strahlungsführungsmitteln (21, 22, 26) nicht unmittelbar erfasst werden, diesen mittelbar zuführen.

2. Sensorvorrichtung nach Anspruch 1, **dadurch gekennzeichnet, dass** zusätzliche reflektive Strahlungsführungsmittel (14, 24, 25) vorgesehen sind, die aus der Scheibe ausgekoppelte Strahlungsanteile, welche von dem Empfänger (32) nicht unmittelbar erfasst werden, diesem mittelbar zuführen.

3. Sensorvorrichtung nach einem der Ansprüche 1 oder 2, **dadurch gekennzeichnet, dass** die reflektiven Strahlungsführungsmittel (14, 24) wenigstens bereichsweise als Teil des Gehäuses (10, 20) ausgestaltet sind.

4. Sensorvorrichtung nach Anspruch 3, **dadurch gekennzeichnet, dass** das Gehäuse aus wenigstens zwei miteinander verbindbaren Gehäuseteilen (10, 20) besteht, von denen jedes im Zusammenbauzustand zusammenwirkende Bestandteile der reflektiven Strahlungsführungsmittel (14, 24) trägt.

5. Sensorvorrichtung nach einem der vorangehenden Ansprüche, **dadurch gekennzeichnet, dass** die reflektiven Strahlungsführungsmittel (24, 25) wenigstens bereichsweise als separates Bauteil in das Gehäuse (10) einlegbar sind.

6. Sensorvorrichtung nach einem der vorangehenden Ansprüche, **dadurch gekennzeichnet, dass** die reflektiven Strahlungsführungsmittel als die vom Sender (31) emittierte Strahlung reflektierend beschichtete Kunststoffoberflächen (14, 24, 25) ausgestaltet sind.

7. Sensorvorrichtung nach einem der vorangehenden Ansprüche, **dadurch gekennzeichnet, dass** die refraktiven Strahlungsführungsmittel als für die vom Sender emittierte Strahlung transparente Kunststoff linsen (21, 22) ausgestaltet sind.

8. Sensorvorrichtung nach einem der Ansprüche 1 bis 6, **dadurch gekennzeichnet, dass** die refraktiven Strahlungsführungsmittel als treppenartige Struktur (26) einer für die vom Sender emittierte Strahlung transparenten Gehäusewandung (23) ausgeführt sind.

9. Sensorvorrichtung nach einem der vorangehenden Ansprüche, **dadurch gekennzeichnet, dass** der Sender (31) Licht im infraroten Spektralbereich aussendet und der Empfänger (32) für Licht dieses Spektralbereichs empfindlich ist.

## Claims

1. Sensor apparatus for detecting wetting on a transparent windowpane, having at least one radiation transmitter (31) and at least one radiation receiver (32) which are arranged in a sensor housing (10, 20), refractive radiation guidance means (21, 22, 26) being provided which couple radiation emitted by the transmitter (31) into the windowpane and, under total reflection at at least one surface of the windowpane, couple a portion of the incoupled radiation dependent on the wetting of the windowpane out of the windowpane and feed it to the receiver (32), **characterized in that** further reflective radiation guidance means (14, 24, 25) are provided which feed indirectly to the refractive radiation guidance means (21, 22, 26) radiation components emitted by the transmitter (31) and not directly detected by the said refractive radiation guidance means.

2. Sensor apparatus according to Claim 1, **characterized in that** additional reflective radiation guidance means (14, 24, 25) are provided which feed indirectly to the receiver (32) the radiation components which are coupled out of the windowpane and are not directly detected by said receiver.

3. Sensor apparatus according to either of Claims 1 and 2, **characterized in that** the reflective radiation guidance means (14, 24) are configured at least partially as part of the housing (10, 20).

4. Sensor apparatus according to Claim 3, **characterized in that** the housing comprises at least two interconnectable housing parts (10, 20) of which, in the assembled state, each supports cooperating components of the reflective radiation guidance means (14, 24).

5. Sensor apparatus according to one of the preceding claims, **characterized in that** the reflective radiation guidance means (24, 25) can be at least partially inserted into the housing (10) as a second component.

6. Sensor apparatus according to one of the preceding claims, **characterized in that** the reflective radiation guidance means are configured as coated plastic surfaces (14, 24, 25) which reflect the radiation emitted by the transmitter (31).

7. Sensor apparatus according to one of the preceding claims, **characterized in that** the refractive radiation guidance means are configured as plastic lenses (21, 22) which are transparent to the radiation emitted by the transmitter.

8. Sensor apparatus according to one of Claims 1 to 6, **characterized in that** the refractive radiation guidance means are designed as a stair-step structure (26) of a housing wall (23) which is transparent to the radiation emitted by the transmitter.

9. Sensor apparatus according to one of the preceding claims, **characterized in that** the transmitter (31) emits light in the infrared spectral region, and the receiver (32) is sensitive to light of this spectral region.

## Revendications

1. Dispositif de détection de l'humidité sur une vitre transparente comportant au moins un émetteur de rayonnement (31) et au moins un récepteur de rayonnement (32) logés dans un boîtier de capteur (10, 20), des moyens de guidage de rayonnement par réfraction (21, 22, 26) étant prévus pour injecter dans la vitre, le rayonnement émis par l'émetteur (31) et découpler une partie du rayonnement injecté, en fonction du mouillage de la vitre, pour réflexion totale sur au moins une surface de la vitre et fournir cette partie au récepteur (32),
**caractérisé par**
d'autres moyens de guidage de rayonnement par réflexion (14, 24, 25) pour conduire indirectement les composantes de rayonnement non émises par l'émetteur (31) et qui ne sont pas directement saisies par les moyens de guidage de rayonnement par réfraction (21, 22, 26).

2. Dispositif de détection selon la revendication 1,
**caractérisé par**
des moyens de guidage de rayonnement (14, 24, 25) par réflexion, supplémentaires, qui conduisent vers le récepteur (32) les parties du rayonnement découplé de la vitre et qui ne sont pas directement saisies par le récepteur (32).

3. Dispositif de détection selon l'une des revendications 1 ou 2,
**caractérisé en ce que**
les moyens de guidage de rayonnement par réflexion (14, 24) sont réalisés au moins par zones sous la forme d'une partie du boîtier (10, 20).

4. Dispositif de détection selon la revendication 3,
**caractérisé en ce que**
le boîtier se compose d'au moins deux parties (10, 20) qui se réunissent l'une à l'autre et dont chacune porte à l'état assemblé, des composants des moyens de guidage de rayonnement (14, 24) par réflexion qui coopèrent.

5. Dispositif de détection selon l'une quelconque des revendications précédentes,
**caractérisé en ce que**
les moyens de guidage de rayonnement par réflexion (24, 25) s'introduisent au moins par zones comme composants distincts dans le boîtier (10).

6. Dispositif de détection selon l'une quelconque des revendications précédentes,
**caractérisé en ce que**
les moyens de guidage de rayonnement par réflexion sont conçus comme surfaces de matière plastique (14, 24, 25) munies d'un revêtement réfléchissant le rayonnement émis par l'émetteur (31).

7. Dispositif de détection selon l'une quelconque des revendications précédentes,
**caractérisé en ce que**
les moyens de guidage du rayonnement par réfraction sont réalisés comme lentilles en matière plastique (21, 22) transparentes pour le rayonnement émis par l'émetteur.

8. Dispositif de détection selon l'une des revendications 1 à 6,
**caractérisé en ce que**
les moyens de guidage de rayonnement par réfraction sont réalisés sous la forme d'une structure en gradins (26) d'une paroi de boîtier (23) transparente pour le rayonnement émis par l'émetteur.

9. Dispositif de détection selon l'une quelconque des revendications précédentes,
**caractérisé en ce que**
l'émetteur (31) émet de la lumière dans la plage spectrale infrarouge et le récepteur (32) est sensible à la lumière correspondant à cette plage spectrale.
